# EUROPEAN PATENT APPLICATION

(11) **EP 2 746 937 A1**
(43) Date of publication of application: **25.06.2014**
(21) Application number: 11871107.6
(22) Date of filing: 19.08.2011
(51) Int. Cl.: G06F 9/445, G06F 13/00

(54) **APPLICATION SYNCHRONIZATION METHOD AND PROGRAM**

(71) Applicant: Synclogue Inc., Tokyo 181-0002 (JP)
(72) Inventor: YAMAMOTO, Tao, Mitaka-shi Tokyo 181-0002 (JP); KURAZEKO, Kyouhei, Tsukuba-shi Ibaraki 305-0821 (JP)
(74) Representative: HOFFMANN EITLE
(86) International application number: PCT/JP2011/068740
(87) International publication number: WO 2013/027248

(57) **Abstract**

The object of the present invention is to implement application synchronization between a plurality of information processing devices, the application using configuration information stored in a configuration information area. A computer stores, in a synchronization configuration information storage unit, configuration information, which is extracted from a configuration information area storing the configuration information required for an execution of an application, as synchronization configuration information in a predetermined data format, activates the application such that the synchronization configuration information stored in the synchronization configuration information storage unit is referred to when the configuration information is needed for executing the application, and transmits data required for executing the application, which includes the synchronization configuration information, to another computer at a predetermined timing.

## Description

The present invention relates to application synchronization method and program.

### BACKGROUND

Personal computers (PC), portable terminals, and other information processing devices are capable of executing a variety of applications such as document creation software and web browsers. These applications are usually used after being installed in the information processing devices. When a user who has a plurality of PCs needs to use a single application on these PCs, the user then needs to install the application in each of the PCs. User settings that are required for the use of the application also need to be performed on each PC. It is therefore extremely troublesome to use a single application on a plurality of PCs.

There is considered the use of a service such as SaaS (Software as a Service), which has been increasingly popular recently, in order to avoid installation of an application into every PC (Patent Document 1, for example). However, the use of such service limits the range of available applications to those provided by the relevant service providers.

Patent Document 1: Patent Publication JP-A-2009-277089

Instead of installing an application on every single PC, another configuration considered is to, for example, share, among a plurality of PCs, an executable file, a data file, or other type of associated file for an application installed in one of the PCs. However, configuration information required for the execution of the application is usually stored in a configuration information area such as a registry. Furthermore, the structure of such configuration information area usually varies depending on the versions of the OS's (Operation System) run on the PCs. For this reason, simply sharing a file among the PCs cannot lead to a synchronization of the application on the PCs.

### SUMMARY

An object of the present invention, therefore, is to synchronize an application on a plurality of information processing devices, the application using configuration information stored in a configuration information area.

An application method performed by a computer according to one aspect of the present invention including: storing, in a synchronization configuration information storage unit, configuration information extracted from a configuration information area storing the configuration information required for an execution of an application, as synchronization configuration information in a predetermined data format; activating the application such that the synchronization configuration information stored in the synchronization configuration information storage unit is referred to when the configuration information is needed for executing the application; and transmitting data required for executing the application, which includes the synchronization configuration information, to another computer at a predetermined timing.

In the present invention, the term "unit" indicates not only physical means but also the fact that a function of the "unit" is implemented by software. Additionally, a function of one "unit" or device may be implemented by two or more physical means or devices, and functions of two or more "units" or devices may be implemented by a single physical means or device.

The present invention is capable of synchronizing an application on a plurality of information processing devices, the application using configuration information stored in a configuration information area.

### DESCRIPTION OF DRAWINGS

Fig. 1 is a diagram showing a configuration example of an application synchronization system according to an embodiment of the present invention;
Fig. 2 is a block diagram showing an example of functions provided in a synchronization server;
Fig. 3 is a diagram showing an example of a structure of synchronization data;
Fig. 4 is a block diagram showing an example of functions provided in a PC;
Fig. 5 is a diagram showing an example of a screen that is displayed when synchronization settings are performed;
Fig. 6 is a diagram showing an example of structures of an application storage unit and a synchronization application storage unit;
Fig. 7 is a diagram showing an example of a structure of synchronization settings registered by a synchronization setting unit;
Fig. 8 is a diagram showing an example of an operation for selecting a synchronization application to be executed;
Fig. 9 is a diagram showing the association of units in the PC; and
Fig. 10 is a flowchart showing an example of a synchronization application execution process carried out in the PC.

### DETAILED DESCRIPTION

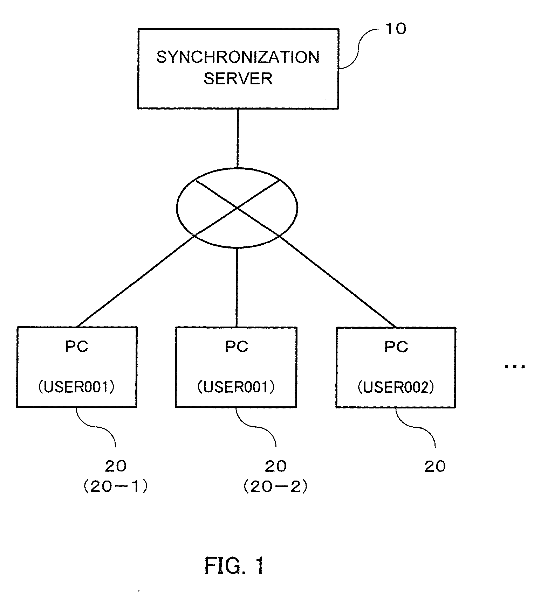

An embodiment of the present invention is described hereinafter with reference to the drawings. Fig. 1 is a diagram showing a configuration example of an application synchronization system according to the embodiment of the present invention. As shown in Fig. 1, the application synchronization system is configured by a synchronization server 10 and a plurality of personal computers (PCs) 20. The synchronization server 10 provides a user with a service that allows synchronization of an application on the plurality of PCs 20, and is configured by using one or more information processing devices. The PCs 20 are information processing devices that are used by the user to execute an application thereon and are capable of communicating with the synchronization server 10 via a network such as the internet.

A user "USER 001," for example, has two PCs: PC 20-1 and PC 20-2. The user "USER 001" can synchronize an application on the PC 20-1 and the PC 20-2 by using the application synchronization system provided by the synchronization server 10 and execute the application, without installing the application in each of the PCs or manually synchronizing data of the application. Synchronization of an application here means to assimilate the environment for executing the application. Such an execution environment includes an executable file itself for the application, user data, configuration information and the like. In other words, synchronizing an application on a plurality of PCs allows a user to execute the application in the same manner no matter which PC the user uses.

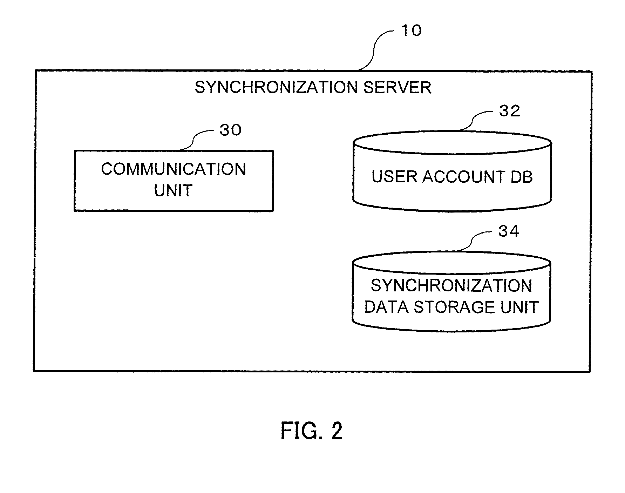

Fig. 2 is a block diagram showing an example of functions provided in the synchronization server 10. As shown in Fig. 2, the synchronization server 10 is configured a communication unit 30, a user account database (DB) 32, and a synchronization data storage unit 34. These units can be implemented by, for example, using storage areas such as memories and storage devices or causing a processor to execute programs stored in the storage areas.

The communication unit 30 is capable of transmitting and receiving data to and from the information processing devices such as the PCs 20 via a network. The communication unit 30 can execute various control operations for synchronizing an application on the plurality of PCs 20.

The user account DB 32 is to store account information of a user who uses the application synchronization system. Examples of the account information include a user ID, a password, and an email address.

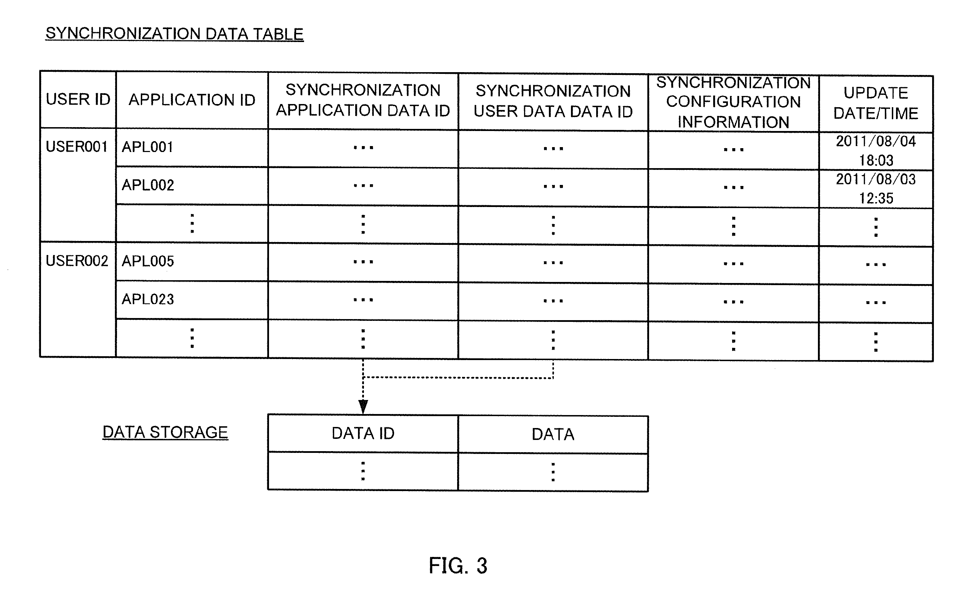

The synchronization data storage unit 34 is to store synchronization data for synchronizing an application execution environment of a user on a plurality of PCs so that the user can execute the application thereon. Fig. 3 shows an example of a structure of the synchronization data. In the example shown in Fig. 3, the synchronization data is configured by data stored in a synchronization table and data stored in a data storage. Stored in the synchronization table are a user ID, an application ID, a synchronization application data ID, a synchronization user data data ID, synchronization configuration information, and an update date/time. A synchronization application and synchronization user data are stored in the data storage.

The user ID is used for identifying a user and is the same as the information registered in the user account DB 32. The application ID is used for identifying the application selected by a user to synchronize. The application ID may be set when, for example, a user registers the application to be synchronized in the synchronization server 10, or may be generated by the synchronization server 10. The synchronization application is application data used for executing the application to be synchronized, and includes an executable file, a DLL (Dynamic Link Library), and the like. The synchronization application also includes information used for designating a folder in each PC 20 to store the application data. The synchronization application data ID represents a place in the data storage for storing the synchronization application. The synchronization user data is user data required when executing an application. This user data is data for each user that is referred to at the time of the execution of the application. Examples of the user data include email data of each user in an email application used for transmitting/receiving an email, and bookmark data of each user in a web browser. The synchronization user data also includes information used for designating a folder in each PC 20 to store the user data. The synchronization user data data ID represents a place in the data storage for storing the synchronization user data. The synchronization configuration information is required for executing an application, and examples of the synchronization configuration information include information that has the same contents as configuration information stored in a registry of each PC 20. The synchronization configuration information also includes information used for designating a folder in each PC 20 to store configuration information. The synchronization configuration information may also be stored in the data storage, as with the synchronization application and synchronization user data. The dates and times when the synchronization application, the synchronization user data, or the synchronization configuration information is updated are set in the section for the update date/time.

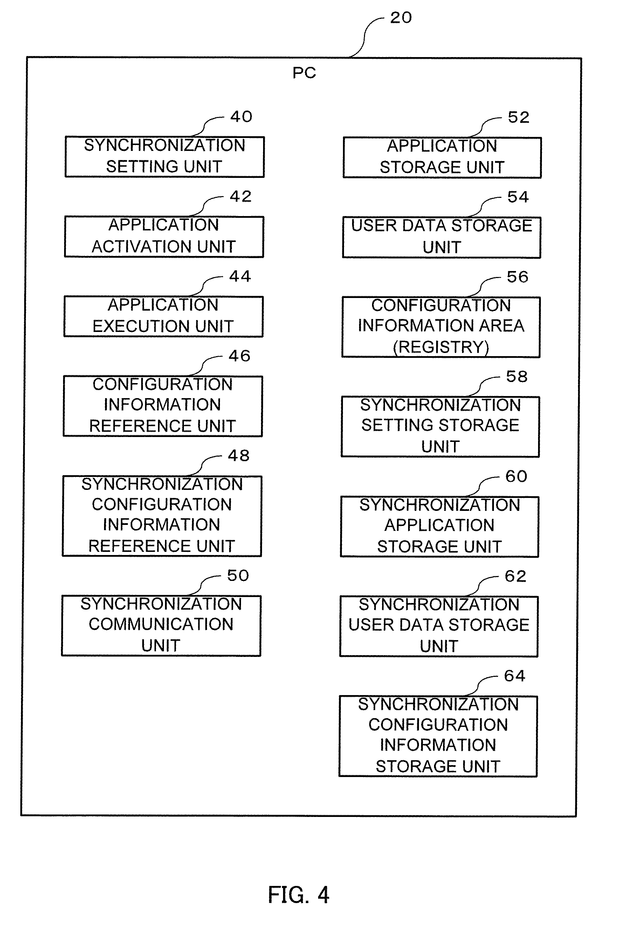

Fig. 4 is a block diagram showing an example of functions provided in one of the PCs 20. As shown in Fig. 4, the PC 20 is configured by a synchronization setting unit 40, an application activation unit 42, an application execution unit 44, a configuration information reference unit 46, a synchronization configuration information reference unit 48, a synchronization communication unit 50, an application storage unit 52, a user data storage unit 54, a configuration information area 56, a synchronization setting storage unit 58, a synchronization application storage unit 60, a synchronization user data storage unit 62, and a synchronization configuration information storage unit 64. These units can be implemented by, for example, using the storage areas such as memories and storage devices or causing a processor to execute programs stored in the storage areas. Especially the synchronization setting unit 40, the application activation unit 42, the synchronization configuration information reference unit 48, and the synchronization communication unit 50 that are required when using the application synchronization system are implemented by executing a program for the application synchronization system. This program is downloaded from, for example, the synchronization server 10 and installed in each of the PCs 20.

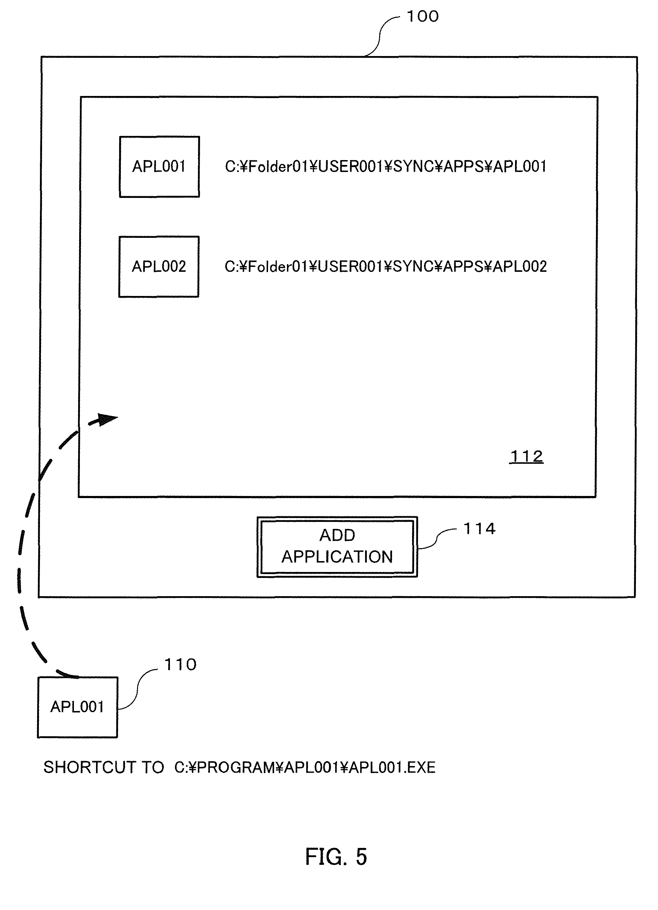

The synchronization setting unit 40 carries out setting for synchronizing an application on the plurality of PCs 20. Fig. 5 shows an example of a screen that is displayed when the synchronization setting is performed. This screen is displayed by the activation of the program for the application synchronization system. By using this screen, a user can register an application to be synchronized and activate the synchronized application. When, for example, a user drags and drops a shortcut of a certain application "APL 001" located on the desktop or the like of a PC 20 of the user onto a display area 112 of a screen 100, the synchronization setting unit 40 registers an application specified by this shortcut, as the application to be synchronized. In addition to this drag-and-drop method, any method can be used to allow the synchronization setting unit 40 to recognize the application to be synchronized. For instance, pressing an application add button 114 to display a file reference interface may specify an application to be registered, as shown in Fig. 5. The synchronization setting unit 40 then stores information on the application to be synchronized, in the synchronization setting storage unit 58. Instead of storing in the synchronization setting storage unit 58, the synchronization setting unit 40 may store the information on the application to be synchronized in the synchronization data storage unit 34 of the synchronization server 10.

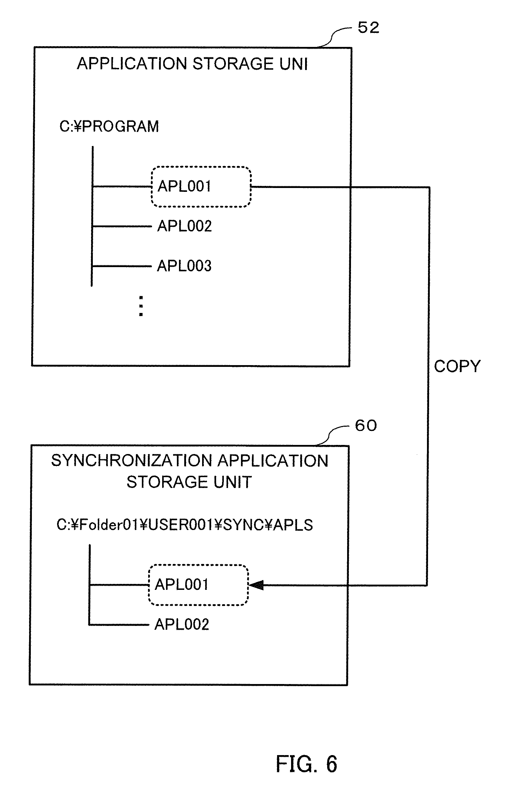

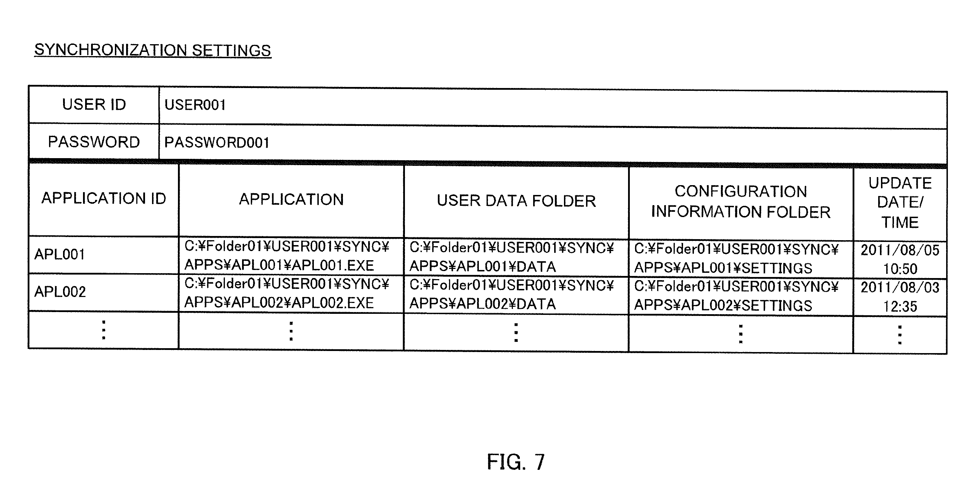

A process for registering an application by means of the synchronization setting unit 40 is now described with reference to Figs. 6 and 7. Fig. 6 shows an example of structures of the application storage unit 52 and the synchronization application storage unit 60. The application storage unit 52 is an area in a PC 20 where application data such as an executable file or DDL is stored when the relevant application is installed in the PC 20 in the usual manner. The synchronization application storage unit 60 is an area where the application data of the application to be synchronized is stored. In the present embodiment, when the application to be synchronized is designated on the screen 100 shown in Fig. 5, the synchronization setting unit 40 can copy the application data of this application from the application storage unit 52 to the synchronization application storage unit 60. For example, when the application "APL 001" is designed as the application to be synchronized, as shown in Fig. 6, the synchronization setting unit 40 can copy the entire folder containing the application data of the "APL 001" from the application storage unit 52 to the synchronization application storage unit 60.

As described hereinafter, when a certain user has the plurality of PCs 20, only one of the PCs 20 needs to have application data stored in its application storage unit 52. In other words, application data may be stored in the application storage unit 52 of one of the PCs 20 into which the user registers the application as the application to be synchronized.

Fig. 7 shows an example of a structure of synchronization settings registered by the synchronization setting unit 40. As shown in Fig. 7, the synchronization settings include information indicating a user ID, a password, an application ID, an application, a user data folder, a configuration information folder, and an update date/time. The user ID and the password are required when using the application synchronization system and are registered by the synchronization setting unit 40 when, for example, the user starts using the system. The application ID is required for identifying the application to be synchronized. Information on an application indicates a place where an executable file for the application to be synchronized is stored.

Information on a user data folder indicates a folder in which the user data corresponding to the application to be synchronized is stored. For instance, when activating an application stored in the application storage unit 52 in the usual manner without using the system, the user data stored in the user data storage unit 54 is used. When, on the other hand, activating an application stored in the synchronization application storage unit 60 by using the system, synchronization user data stored in the synchronization user data storage unit 62 is used. Information on the user data folder included in the synchronization settings is required for specifying a place for storing the synchronization user data stored in the synchronization user data storage unit 62.

Information on a configuration information folder indicates a folder in which configuration information of the application to be synchronized is stored. For instance, when activating an application stored in the application storage unit 52 in the usual manner without using the system, configuration information stored in the configuration information area 56 is used. The configuration information area 56 is a special data area such as a registry where various configuration information that are generated upon installation or execution of an application are stored. When, on the other hand, activating an application stored in the synchronization application storage unit 60 using the system, synchronization configuration information stored in the synchronization configuration information storage unit 64 is used. Information on the configuration information folder included in the synchronization settings is required for specifying a place for storing the synchronization configuration information stored in the synchronization configuration information storage unit 64. Note that the synchronization configuration information can be a file in a predetermined data format that includes contents same as the configuration information stored in the configuration information area 56. For example, the synchronization configuration information can be structured data such as a serialized message. The synchronization configuration information can be referred to without being restored in the configuration information area 56.

The dates and times when the synchronization application, synchronization user data, or synchronization configuration information is updated are set in the section corresponding to the update date/time. The synchronization setting unit 40 can set, as update date/time initial information, the date and time at which the synchronization application is registered. As described hereinafter, the update date/time included in the synchronization settings is also updated when the synchronization application, synchronization user data, or synchronization configuration information is updated as a result of the execution of the synchronization application.

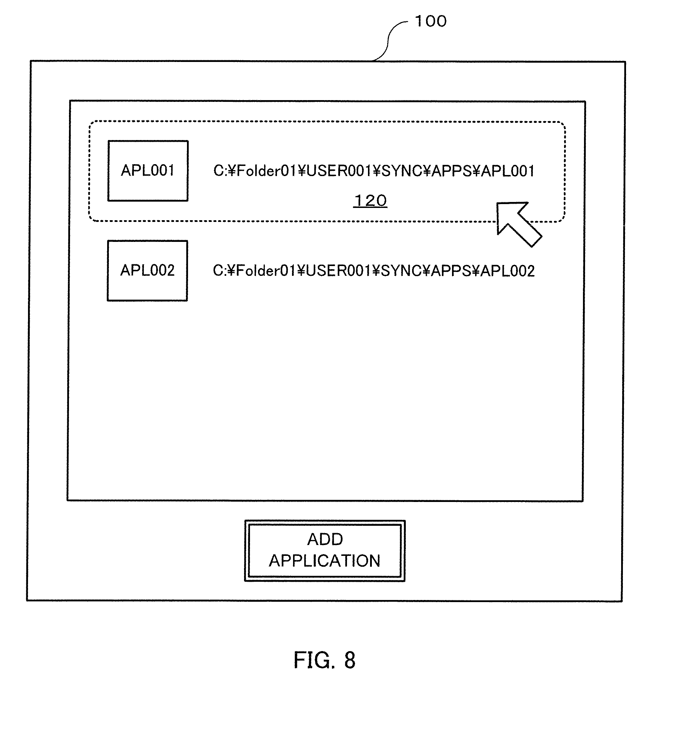

In Fig. 1, the application activation unit 42 activates the synchronization application in response to a user operation. For example, when a display area 120 that is allocated the application "APL 001" is selected on the screen 100 shown in Fig. 8, the application activation unit 42 refers to the synchronization settings stored in the synchronization setting storage unit 58 and activates the synchronization application stored in the synchronization application storage unit 60. In so doing, the application activation unit 42 activates the synchronization application in such a manner that a user data reference is not the user data storage unit 54 but the synchronization user data storage unit 62. Specifically, the application activation unit 42 refers to the synchronization settings stored in the synchronization setting storage unit 58 to acquire the information on the user data folder associated with the application to be activated. The application activation unit 42 then activates the synchronization application in such a manner that this folder becomes the user data reference. For example, the application activation unit 42 sets the information on this folder, which is the user data reference, at an environment variable used upon execution of the synchronization application. The application activation unit 42 also activates the synchronization application in such a manner that the configuration information reference becomes the synchronization configuration information storage unit 64 instead of the configuration information area 56. A method for setting the synchronization configuration information storage unit 64 as the configuration information reference is described hereinafter.

The application execution unit 44 executes various processes on the application activated by the application activation unit 42. Here, because the synchronization application is the same as the application stored in the application storage unit 52, the processes executed by the application execution unit 44 have the same contents as the application stored in the application storage unit 52. However, the application execution unit 44 uses the user data stored not in the user data storage unit 54 but in the synchronization user data storage unit 62. The application execution unit 44 also uses the configuration information stored not in the configuration information area 56 but in the synchronization configuration information storage unit 64.

The configuration information reference unit 46 is used for referring to the configuration information stored in the configuration information storage area 56 when executing the application stored in the application storage unit 52. For example, the configuration information reference unit 46 is implemented by a DLL and can be linked dynamically upon activation of an application.

The synchronization configuration information reference unit 48 is used for referring to the configuration information stored in the synchronization configuration information storage unit 64 upon execution of the application stored in the synchronization application storage unit 60. For example, as with the configuration information reference unit 46, the synchronization configuration information reference unit 48 is implemented by a DLL and can dynamically be linked upon activation of the synchronization application. Such synchronization configuration information reference unit 48 is dynamically linked to the application execution unit 44 in place of the configuration information reference unit 46 when the application activation unit 42 activates the synchronization application. Accordingly, when a function used for accessing the configuration information stored in the configuration information area 56 is called up in the process executed by the application execution unit 44, not the configuration information reference unit 46 but the synchronization configuration information reference unit 48 is activated, and the configuration information stored in the synchronization configuration information storage unit 64 is referred to. In other words, the synchronization configuration information reference unit 48 hooks (steals) this function call on the configuration information reference unit 46 by the application execution unit 44, and executes the process on behalf of the configuration information reference unit 46. This method is generally called "DLL injection."

Furthermore, when referring to the synchronization configuration information storage unit 64 in response to an instruction from the application execution unit 44, and when target configuration information is not stored in the synchronization configuration information storage unit 64, the synchronization configuration information reference unit 48 acquires this configuration information from the configuration information area 56 and returns the configuration information to the application execution unit 44. The synchronization configuration information reference unit 48 then stores the configuration information in the synchronization configuration information storage unit 64 in a predetermined data format required by the synchronization configuration information storage unit 64. This is because, when registering the application to be synchronized, it is not possible to determine which configuration information in the configuration information area 56 is used by this application. Therefore, the synchronization configuration information reference unit 48 extracts configuration information, which is designated upon execution of the application, from the configuration information area 56 and stores the extracted configuration information in the synchronization configuration information storage unit 64. Note that the synchronization configuration information reference unit 48 calls the configuration information reference unit 46 when extracting the configuration information from the configuration information area 56.

The synchronization communication unit 50 communicates data for synchronizing an application on the plurality of PCs 20. Specifically, the synchronization communication unit 50 can refer to the synchronization setting storage unit 58 to synchronize the application to be synchronized, user data, and configuration information, on the PCs and the synchronization server 10. For instance, the synchronization communication unit 50 can conform the contents stored in the synchronization application storage unit 60, the synchronization user data storage unit 62, and the synchronization configuration information storage unit 64 and the contents stored in the synchronization data storage unit 34 of the synchronization server 10 with the latest conditions for all the user IDs and application IDs by comparing the contents of the synchronization settings stored in the synchronization setting storage unit 58 with the contents of the synchronization data stored in the synchronization data storage unit 34 of the synchronization server 10. The synchronization communication unit 50 and the synchronization server 10 communicate with each other, for example, when the application activation unit 42 activates the screen 100, when the synchronization application is ended, at a predetermined interval set by a timer, or at any other times.

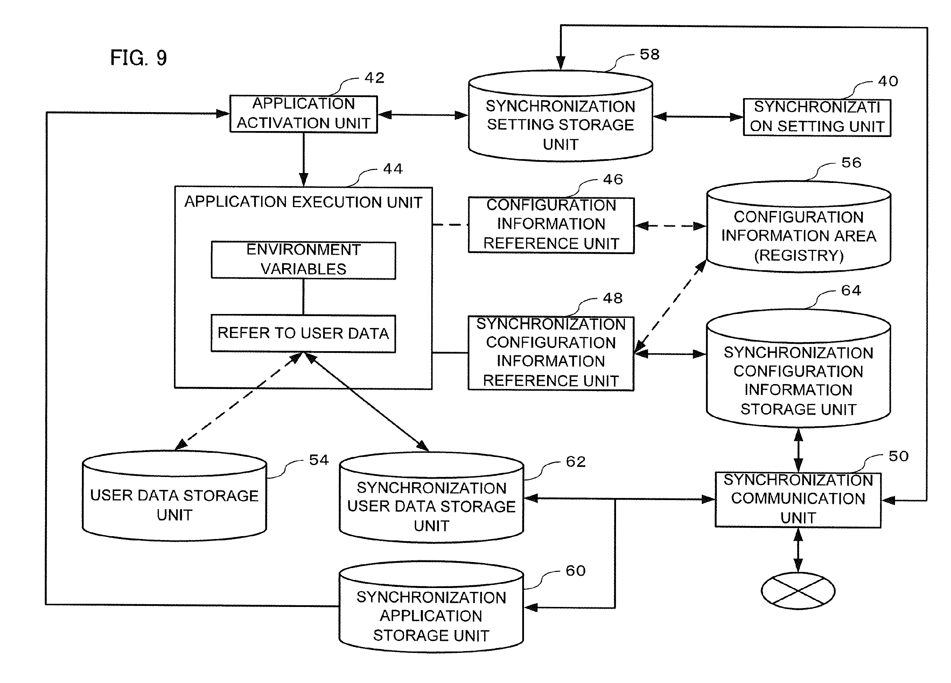

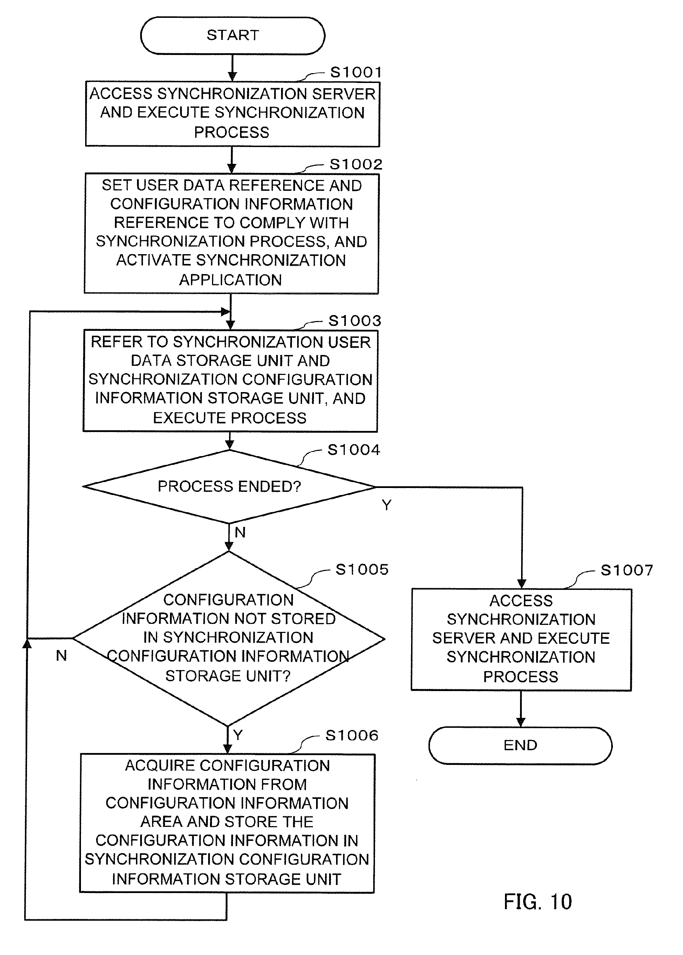

Fig. 9 is a diagram showing the association of the units in one of the PCs 20. Fig. 10 is a flowchart showing an example of a synchronization application execution process carried out in the PC 20. The synchronization application execution process is now described with reference to Figs. 9 and 10.

Once the program for the application synchronization system is activated, the synchronization communication unit 50 accesses the synchronization server 10 to execute a synchronization process (S1001). Specifically, the synchronization communication unit 50 compares the contents of the synchronization settings stored in the synchronization setting storage unit 58 with the contents of the synchronization data stored in the synchronization data storage unit 34 of the synchronization server 10, and, when it is determined that the data stored in the synchronization server 10 is newer than the data stored in the PC 20, updates the synchronization application storage unit 60, the synchronization user data storage unit 62, and the synchronization configuration information storage unit 64 based on the data stored in the synchronization server 10. When the application to be synchronized is not installed in the PC 20 in the usual manner, an executable file and the like for this application are not stored in the application storage unit 52. In such a case, as a result of the synchronization process executed by the synchronization communication unit 50, an executable file and the like for this application are downloaded from the synchronization server 10 and stored in the synchronization application storage unit 60. The same applies to the user data and configuration information.

Once a synchronization application to be executed is selected as shown in, for example, Fig. 8, the application activation unit 42 sets the user data reference and configuration information reference to comply with the synchronization process and activates the synchronization application (S1002). Specifically, the application activation unit 42 refers to the synchronization setting storage unit 58, sets the user data folder and the user data reference, designated by the synchronization settings, at environment variables, and activates the synchronization application in such a manner that the synchronization configuration information stored in the synchronization configuration information storage unit 64 is referred to in place of the configuration information stored in the configuration information area 56. As a result, the application execution unit 44 is generated.

The application execution unit 44 refers to the synchronization user data storage unit 62 in accordance with the environment variables, refers to the synchronization configuration information storage unit 64 via the synchronization configuration information reference unit 48, and thereby executes various processes defined by the application (S1003). The various processes are executed repeatedly by the application execution unit 44 when an instruction to end the processes is not issued (S1004: N). When the configuration information to be referred to is not stored in the synchronization configuration information storage unit 64 (S1005: Y), the synchronization configuration information reference unit 48 called by the application execution unit 44 acquires the configuration information to be referred to from the configuration information area 56, returns the acquired configuration information to the application execution unit 44, generates configuration information that is converted into the data format required by the synchronization configuration information storage unit 64, and stores the generated configuration information in the synchronization configuration information storage unit 64 (S1006).

When an instruction to end the synchronization application is issued through a user operation or the like (S1004: Y), the synchronization communication unit 50 accesses the synchronization server 10 to execute the synchronization process, and ends the process (S1007). Specifically, the synchronization communication unit 50 refers to the synchronization setting storage unit 58, the synchronization application storage unit 60, the synchronization user data storage unit 62, and the synchronization configuration information storage unit 64, to update the update date/time included in the synchronization settings. The synchronization communication unit 50 then compares the contents of the synchronization settings stored in the synchronization setting storage unit 58 with the contents of the synchronization data stored in the synchronization data storage unit 34 of the synchronization server 10. When it is determined that the data stored in the synchronization server 10 are older than the data stored in the PC 20, the synchronization communication unit 50 uploads the data stored in the PC 20 in the synchronization server 10, and updates the synchronization data stored in the synchronization data storage unit 34 of the synchronization server 10. Accordingly, when a user uses the system to execute the same application on a different PC 20, the synchronization data are downloaded from the synchronization server 10 so that the application can be executed in the same execution environment.

The above has described the present embodiment. With the application synchronization system of the present embodiment, a user having a plurality of PCs can synchronize an application on the PCs and execute the application, without installing the application in each of the PCs or synchronizing the data manually. According to the present embodiment, a synchronization application is activated in such a manner that the synchronization configuration information stored in the synchronization configuration information storage unit 64 is referred to in place of the configuration information stored in the configuration information area 56. Therefore, an application using the configuration information stored in the configuration information area 56 can be synchronized on a plurality of PCs. In other words, according to the present embodiment, even when a data structure of the configuration information area 56 varies depending on the version of the OS run on each PC, an application can be synchronized and executed on a plurality of PCs regardless of the structural difference.

Moreover, according to the present embodiment, when the synchronization configuration information is not stored in the synchronization configuration information storage unit 64, the synchronization configuration information reference unit 48 can extract configuration information corresponding to the synchronization configuration information from the configuration information area 56 and store the extracted configuration information in the synchronization configuration information storage unit 64, in a data format for synchronization configuration information. Thus, even when it is impossible to determine beforehand which configuration information stored in the configuration information area 56 can be used by the application, configuration information used by the application can be specified and stored in the synchronization configuration information storage unit 64.

Note that the present embodiment is intended merely to facilitate understanding of the present invention and not to limit the present invention. It is needless to say that modifications and improvements are possible without departing from the gist of the present invention, and equivalents thereof are also encompassed by the present invention.

For example, in the present embodiment a PC is described as a client that executes an application in the application synchronization system: however, the client is not limited to a PC, and therefore any information processing devices such as portable terminals can be used as clients.

Furthermore, in the present embodiment, when the synchronization configuration information to be referred to is not stored in the synchronization configuration information storage unit 64, the configuration information is extracted from the configuration information area 56 and stored in the synchronization configuration information storage unit 64; however, for a PC in which an application to be synchronized is registered beforehand, the entire configuration information stored in the configuration information area 56 may be extracted and stored in the synchronization configuration information storage unit 64. However, as described in the present embodiment, the data size of the synchronization configuration information can be reduced by extracting the configuration information from the configuration information area 56 and storing the extracted configuration information in the synchronization configuration information storage unit 64 at the time when the synchronization configuration information is referred to for the first time.

For instance, in the present embodiment, the process illustrated in Fig. 10 executes synchronization between the PC 20 and the synchronization server 10 at a timing when the program for the application synchronization system is activated or at a timing when the synchronization application is ended; however, the timing of implementing the synchronization process is not limited these timings and any desired timing is used.

In addition, in the present embodiment, as shown in Fig. 7 a single update date/time is kept for all of the application, the user data, and the configuration information, and the synchronization process is executed based on this update date/time; however, update dates/times may be determined for the application, the user data, and the configuration information respectively, and the synchronization process may be executed for each of these items. Also, the update date/time may be determined for each file. The information on the update dates/times may not be kept as the information included in the synchronization settings but may be used as the information indicating the update dates/times corresponding to the folders and files, the information being held by the OS.

- 10: Synchronization server
- 20: Personal computer
- 30: Communication unit
- 32: User account database
- 34: Synchronization data storage unit
- 40: Synchronization setting unit
- 42: Application activation unit
- 44: Application execution unit
- 46: Configuration information reference unit
- 48: Synchronization configuration information reference unit
- 50: Synchronization communication unit
- 52: Application storage unit
- 54: User data storage unit
- 56: Configuration information area
- 58: Synchronization setting storage unit
- 60: Synchronization application storage unit
- 62: Synchronization user data storage unit
- 64: Synchronization configuration information storage unit

## Claims

1. An application synchronization method performed by a computer, comprising :
storing, in a synchronization configuration information storage unit, configuration information extracted from a configuration information area storing the configuration information required for an execution of an application, as synchronization configuration information in a predetermined data format;
activating the application such that the synchronization configuration information stored in the synchronization configuration information storage unit is referred to when the configuration information is needed for executing the application; and
transmitting data required for executing the application to another computer at a predetermined timing, the data including the synchronization configuration information.

2. The application synchronization method according to claim 1, wherein when the synchronization configuration information is needed for executing the application but the synchronization configuration information is not stored in the synchronization configuration information storage unit, the computer extracts configuration information corresponding to the synchronization configuration information from the configuration information area, and stores the extracted configuration information in the synchronization configuration information storage unit as the synchronization configuration information in the predetermined data format.

3. The application synchronization method according to claim 1 or 2, further comprising:
storing, in a synchronization user data storage unit, synchronization user data in a same data format as user data, the user data being one of data required for an execution of the application, the synchronization user data storage unit being different from a data storage unit storing the user data;
activating the application such that the synchronization user data stored in the synchronization user data storage unit is referred to when the user data is needed for executing the application; and
transmitting the synchronization user data stored in the synchronization user data storage unit to the other computer at a predetermined timing.

4. The application synchronization method according to any one of claims 1 to 3, wherein the data format of the configuration information stored in the configuration information area is different from that of the synchronization configuration information stored in the synchronization configuration information storage unit.

5. A program for causing a computer to implement:
a function of storing, in a synchronization configuration information storage unit, configuration information, which is extracted from a configuration information area storing the configuration information required for an execution of an application, as synchronization configuration information in a predetermined data format,;
a function of activating the application such that the synchronization configuration information stored in the synchronization configuration information storage unit is referred to when the configuration information is needed for executing the application; and
a function of transmitting data required for executing the application, which includes the synchronization configuration information, to another computer at a predetermined timing.
